# EUROPÄISCHE PATENTANMELDUNG

(11) **EP 1 637 321 A1**
(43) Veröffentlichungstag der Anmeldung: **22.03.2006**
(21) Anmeldenummer: 05017840.9
(22) Anmeldetag: 17.08.2005
(51) Int. Cl.: B32B 38/06

(54) **Verfahren zum Strukturieren von Materialien mittlerer Festigkeit**

(30) Priorität: 18.08.2004 DE 102004039956
(71) Anmelder: ADAM OPEL AG, 65423 Rüsselsheim (DE)
(72) Erfinder: Jaksch, Peter, 65428 Rüsselsheim (DE); Langendorf, Ralf, 64572 Büttelborn-Worfelden (DE); Rockstein, Raimund, 65239 Hochheim (DE); Schmidt, Herbert, 8380 Jennersdorf (AT)
(74) Vertreter: Daniel, Ulrich W.P.

(57) **Zusammenfassung**

Bei einem Verfahren zum Strukturieren von Bahnen aus Materialien mittlerer Festigkeit, insbesondere von Leder, wird in eine Bahn (1) eine Vielzahl von Vertiefungen (3) eingebracht, ohne die Bahn zu durchstoßen. Die Bahn (1) wird mit einer Kaschierung (2) ausgerüstet.

## Beschreibung

Die Erfindung betrifft ein Verfahren zum Strukturieren von Materialien mittlerer Festigkeit, insbesondere von Leder, bei dem in eine Bahn des Materials eine Vielzahl von Vertiefungen eingebracht werden.

Aus der Deutschen Offenlegungsschrift DE 28 34 873 A1 ist ein Verfahren zum Perforieren von dünnen Blechen und Stoffen mittlerer Festigkeit wie Leder, Textilien und Kunststoffe bekannt, bei dem rotierende Nadeln in das betreffende Material stechen. Bei Materialien größerer Dicke sollen statt durchgehender Löcher auch Sacklöcher eingestochen werden können.

Die Deutsche Offenlegungsschrift DE 44 37 333 A1 beschreibt ein Verfahren zum Anbringen von Löchern oder Perforationen in flächige Materialien, das sich für die Herstellung von Leder- und Stoffbezügen für Möbel und Autositze eignet. Dabei wird das zu perforierende Material zwischen einer Walze mit Stanzeisen und einem Gegenlager eingeführt, um Löcher aus dem Material zu stanzen.

Für verschiedene Anwendungen ist es nachteilig, dass Flüssigkeit oder Feuchtigkeit, durch die Perforationen dringen kann. Dies gilt insbesondere für Sitzbezüge von Verkehrsmitteln. Wenn ein Getränk umgeschüttet wird oder regnet es bei geöffnetem Verdeck, kann Flüssigkeit in die Sitzpolster eindringen. Dies kann zu Schimmelbildung und Zersetzung des Polstermaterials führen.

Der vorliegenden Erfindung liegt nun die Aufgabe zugrunde, ein Verfahren zum Strukturieren von Bahnen aus Materialien mittlerer Festigkeit, insbesondere von Leder bereitzustellen, mit dem das zu bearbeitende Material eine perforationsähnliche Struktur erhalten kann, ohne gegen Wasser und Feuchtigkeit durchlässig zu werden.

Erfindungsgemäß wird diese Aufgabe durch ein Verfahren mit den Merkmalen des Patentanspruchs 1 gelöst.

Demgemäss wird bei einem Verfahren zum Strukturieren von Bahnen aus Materialien mittlerer Festigkeit, insbesondere von Leder, eine Vielzahl von Vertiefungen in eine Bahn eingebracht, ohne durch das Einbringen der Vertiefungen die Bahn zu durchstoßen. Die Bahn wird anschließend mit einer Kaschierung ausgerüstet.

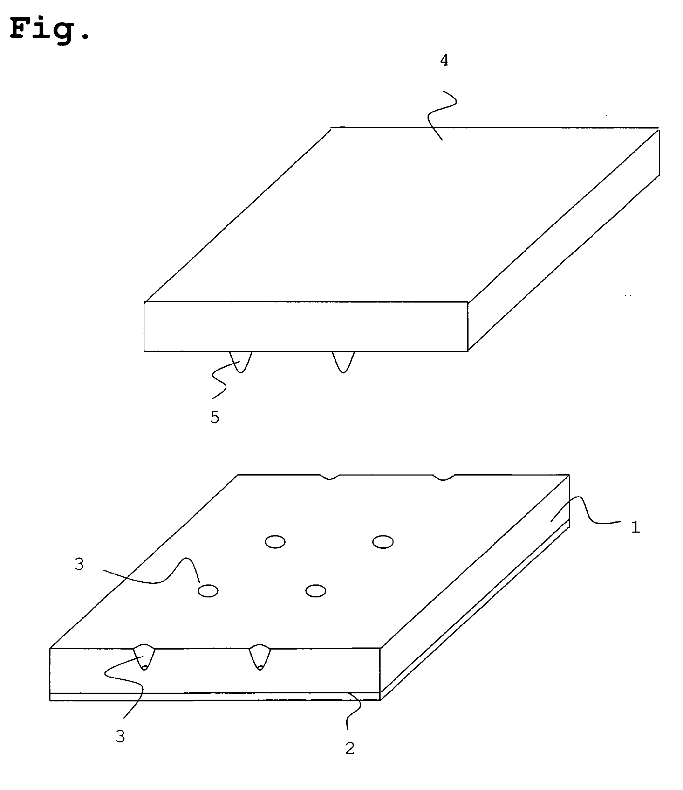

Vorteilhafte Ausgestaltungen und Weiterbildungen der Erfindung sind Gegenstand der weiteren Unteransprüche sowie der Beschreibung unter Bezugnahme auf die Zeichnung.

Vorzugsweise wird die Kaschierung auf die Bahn aufgebracht, bevor die Vertiefungen eingebracht werden.

Vorzugsweise durchdringen die Vertiefungen wenigstens 25 % und höchstens 80 % der Dicke der Bahn.

Die Vertiefungen können besonders vorteilhaft durch Prägen in die Bahn (Leder) gebracht oder hergestellt werden.

Erfindungsgemäß strukturierte Materialien können als Sitzbezüge, insbesondere als Sitzbezüge für Sitze von Verkehrs- und Transportmitteln wie Personenkraftwagen, Motorrädern, Bussen, Bahnen, Flugzeugen und Schiffen Anwendung finden.

Die Erfindung wird nachfolgend anhand der einzigen Figur der Zeichnung beispielhaft erläutert. Dabei zeigt:
- Fig.: eine perspektivische Ansicht einer mit einer erfindungsgemäßen Struktur versehenen Bahn und ein Werkzeug hierfür.

Eine Bahn 1 aus Leder wird zunächst auf ihrer Rückseite mit einer Kaschierung 2 aus Gewebe und Kleber ausgerüstet. Die Fixierung der Kaschierung 2 auf der Bahn 1 erfolgt mit einem Heißschmelzkleber. Die Kaschierung hat die Aufgabe die Bahn 1 zu verstärken und anschließend eingebrachte Vertiefungen 3 zu stabilisieren.

Die in der Figur dargestellte Bahn 1 ist zur Veranschaulichung so abgeschnitten, dass die Form zweier Vertiefungen 3 in der Bahn exemplarisch erkennbar ist.

Die Vertiefungen 3 werden mit einem Stempel 4 in die Bahn geschnitten und geprägt. Der Stempel 4 ist als ebene Platte mit einer Vielzahl von runden, spitz zulaufenden Vorsprüngen 5 oder Stacheln ausgebildet. Die in die Bahn 1 eingebrachten Vertiefungen weisen eine Konusform bzw. Kegelform auf, die sich in das Material der Bahn 1 hinein verjüngt.

Wird die Bahn 1 auf die Größe des Stempels 4 zugeschnitten, kann die Bahn in einem einzigen Press- oder Prägevorgang mit den Vertiefungen 3 versehen werden.

Die Vorsprünge werden in ihrer Länge so dimensioniert und der Anpressdruck wird so eingestellt, dass die Vertiefungen die Dicke des Leders nicht vollständig durchdringen. Beim Prägen des Leders wird ein Druck zwischen 20 bar und 100 bar, bei einer Temperatur von mindestens 60°C und höchstens 110°C für wenigstes 20 Sekunden und höchstens 180 Sekunden aufrechterhalten. Besonders gute Resultate lassen sich erzielen, wenn für etwa 120 Sekunden ein Druck von etwa 80 bar bei einer Temperatur von etwa 100 °C eingestellt wird.

Nach dem Prägen der Bahn in dem gewünschten Design erfolgt ein Zuschneiden auf die gewünschte Größe. Anschließend kann die Bahn zum Beziehen von Sitzen oder anderer Gegenstände verwendet werden.

Obgleich die vorliegende Erfindung vorstehend anhand eines bevorzugten Ausführungsbeispiels beschrieben wurde, ist sie nicht darauf beschränkt, sondern auf vielfältige Art und Weise modifizierbar.

So sei die Erfindung nicht auf die Bearbeitung von Bahnen aus Leder oder auf das Einbringen der Vertiefungen durch ein Prägeverfahren beschränkt. Vielmehr können mit dem erfindungsgemäßen Verfahren auch andere Materialien mittlerer Festigkeit strukturiert werden, wie beispielsweise viele Kunststoffe und insbesondere Kunstleder, ohne dass vom grundlegenden Prinzip der Erfindung abgewichen wird.

### Bezugszeichenliste

- 1: Bahn
- 2: Kaschierung
- 3: Vertiefung
- 4: Stempel
- 5: Vorsprung

## Patentansprüche

1. Verfahren zum Strukturieren von Bahnen aus Materialien mittlerer Festigkeit, insbesondere von Leder, mit den Schritten:
- in eine Bahn (1) wird eine Vielzahl von Vertiefungen (3) eingebracht, ohne durch das Einbringen der Vertiefungen (3) die Bahn (1) zu durchstoßen,
- die Bahn (1) wird mit einer Kaschierung (2) ausgerüstet.

2. Verfahren nach Anspruch 1, **dadurch gekennzeichnet, dass** die Kaschierung (2) auf die Bahn (1) aufgebracht wird, bevor die Vertiefungen (3) in die Bahn eingebracht werden.

3. Verfahren nach einem der vorhergehenden Ansprüche, **dadurch gekennzeichnet, dass** die Kaschierung ((2) auf die Bahn (1) geklebt wird.

4. Verfahren nach einem der vorhergehenden Ansprüche, **dadurch gekennzeichnet, dass** die Vertiefungen (3) wenigstens 25 % und höchstens 80 % der Dicke der Bahn (1) durchdringen.

5. Verfahren nach einem der vorhergehenden Ansprüche, **dadurch gekennzeichnet, dass** die Vertiefungen (3) sich konusförmig von der Oberfläche in die Tiefe der Bahn (1) verjüngen.

6. Verfahren nach einem der vorhergehenden Ansprüche, **dadurch gekennzeichnet, dass** die Vertiefungen (3) durch Prägen eingebracht werden.

7. Verfahren nach dem vorhergehenden Anspruch, **dadurch gekennzeichnet, dass** beim Prägen ein Druck von wenigstens 20 bar bei einer Temperatur von mindestens 60 °C, und vorzugsweise ein Druck von etwa 80 bar bei einer Temperatur von etwa 100 °C eingestellt wird.

8. Verfahren nach dem vorhergehenden Anspruch, **dadurch gekennzeichnet, dass** der Druck für wenigstens 20 Sekunden, und vorzugsweise etwa 120 Sekunden aufrechterhalten wird.

9. Verfahren nach einem der vorhergehenden Ansprüche, **dadurch gekennzeichnet, dass** die Vertiefungen (3) mit einem Stempel (4) eingebracht werden, der mit einer Vielzahl von Vorsprüngen (5) versehen ist.

10. Verfahren nach dem vorhergehenden Anspruch, **dadurch gekennzeichnet, dass** der Stempel (4) eine im wesentlichen Ebene Platte ist.

11. Verfahren nach dem vorhergehenden Anspruch, **dadurch gekennzeichnet, dass** die Bahn (1) vor dem Einbringen der Vertiefungen (3) maximal auf die Größe des Stempels (4) zugeschnitten wird.

12. Verfahren nach einem der Ansprüche 1 bis 5, **dadurch gekennzeichnet, dass** die Vertiefungen (3) in die Bahn (1) geprägt werden.

13. Verfahren nach einem der vorhergehenden Ansprüche, **dadurch gekennzeichnet, dass** die Bahn (1) aus Leder, Kunststoff oder Kunstleder besteht.
